# EUROPÄISCHE PATENTSCHRIFT

(11) **EP 0 373 119 B1**
(45) Veröffentlichungstag und Bekanntmachung des Hinweises auf die Patenterteilung: **02.02.1994**
(21) Anmeldenummer: 89810917.8
(22) Anmeldetag: 05.12.1989
(51) Int. Cl.: C09B 67/42, C09B 67/26, C09B 67/30

(54) **Verfahren und Vorrichtung zur Herstellung einer Farblösung sowie deren Verwendung zum Färben von Textilien**
Process and apparatus for the preparation of a dyeing solution and their use in textile colouration
Procédé et appareillage pour la préparation d'une solution de teinture et leur utilisation pour la teinture de textiles

(30) Priorität: 09.12.1988 CH 4563/88
(43) Veröffentlichungstag der Anmeldung: 13.06.1990
(73) Patentinhaber: Marte, Walter, CH-9631 Ulisbach (CH)
(72) Erfinder: Marte, Walter, CH-9631 Ulisbach (CH); Marte, Anton, CH-5213 Villnachern (CH); Marte, Erich, CH-5300 Turgi (CH)
(74) Vertreter: Frauenknecht, Alois J.

(56) Entgegenhaltungen:
- DE-B- 1 025 703
- FR-A- 1 394 598
- US-A- 2 637 534

## Beschreibung

Die Erfindung betrifft ein Verfahren zur Herstellung einer Farblösung aus einer Suspension bestehend aus schwerlöslichen Farbpigmenten, Dispergiermitteln, Reduktionsmitteln, polaren Lösungsmitteln wie Wasser, Alkoholen, Tensiden, Alkalien und/oder Säuren, wobei diese Komponenten mechanisch gemischt werden, und eine Vorrichtung zur Durchführung dieses Verfahrens mit einem Mischkessel zur mechanischen Mischung der Komponenten der Suspension.

Zum Färben von Textilien werden Farblösungen aus mehr oder weniger schwerlöslichen Farbpigmenten in Assoziaten und/oder Agglomeraten verwendet. Dies führt bei der Reduktion der Küpenfarbstoffe trotz Verwendung von Katalysatoren zu einem langsamen und unvollständigen Umsatz, und in der Folge zu verminderten Farbausbeuten auf den Textilien und zu erhöhter Umweltbelastung durch nicht umgesetzte Farbstoffe.

Der vorliegenden Erfindung stellt sich nun die Aufgabe, ein Verfahren und eine Vorrichtung zur Herstellung von Farblösungen zu schaffen, die eine wesentlich homogenere und feinkörnigere Verteilung der Farbpigmente in der Farblösung erzielt und somit eine wesentlich verbesserte Reduktion und eine erheblich höhere Ausbeute bei der Färbung, insbesondere mit Küpenfarbstoffen, erhalten wird.

Diese Aufgabe wird dadurch gelöst, dass in einem ersten Verfahrensschritt die Suspension gerührt wird, und dass in einem zweiten Verfahrensschritt die Agglomerate der Farbpigmente umgewälzt und mittels Ultraschall zerkleinert werden und die Farblösung anschliessend oder gleichzeitig abgezogen wird.

Die erfindungsgemässe Vorrichtung besteht aus einem Mischkessel, der mit zumindest einem Reaktionsgefäss mit Ultraschallgebern verbunden ist, wobei eine Rückleitung zum Mischkessel vorgesehen ist.

Die Erfindung hat den grossen Vorteil, dass die Auflösung der Farbpigmente wesentlich rascher abläuft, so dass insbesondere das Färben mit Küpenfarbstoffen nunmehr kontinuierlich erfolgen kann. Durch die Verwendung von Ultraschall wird ein besserer Wirkungsgrad der chemischen Reaktion erreicht, so dass weniger Chemikalien benötigt werden und eine erheblich geringere Umweltbelastung entsteht. Zusätzlich kann dadurch der Anteil an Katalysator bis zu 60% verringert werden.

Durch Einstellen der optimalen Betriebstemperatur gemäss Anspruch 2 werden die chemischen Reaktionen weiter beschleunigt, was eine höhere Wirtschaftlichkeit des Verfahrens ergibt.

Das Verfahren gemäss Anspruch 3 eignet sich besonders für die vollautomatische Färbung von Textilien, da stets eine gleichmässig homogene Farblösung erhalten wird. Auch lässt sich damit ein rascher Farbwechsel durchführen, so dass der maschinentechnische Aufwand reduziert werden kann.

Das Verfahren nach Anspruch 4 hat sich insbesondere bei Dithioniten bewährt.

Das Verfahren hat sich gemäss Anspruch 5 besonders bewährt für Küpenfarbstoffe und lässt in einem einzigen Färbevorgang eine grosse Gleichmässigkeit und eine hohe Farbkonstanz des gefärbten Garnes und/oder Gewebes erreichen.

Die nach Anspruch 6 eingesetzten Reduktionsmittel erlauben eine besonders hohe Flexibilität des Verfahrens, da eine homogene Farbstoffreduktion in situ erfolgt.

Die Vorrichtung gemäss Anspruch 8 hat den grossen Vorteil, dass die kostengünstigen, handelsüblichen Ultraschallgeber besonders wirksam angeordnet sind.

Nach Anspruch 9 sind vorteilhafterweise 24 Ultraschallgeber vorgesehen, wobei die Membranplatte auf dem Reaktionsgefäss angeschraubt ist; die Schrauben können auf einfache Weise regelmässig überprüft werden, um ggf. die durch den Ultraschall verursachte Lockerung zu beheben. Besonders bei aggressiven Farblösungen hat sich eine Membranplatte aus einem legierten Stahl bewährt.

Ein kammerartiger Bereich im Reaktionsgefäss nach Anspruch 10 ist besonders vorteilhaft, um die Suspension mit den Farbagglomeraten in einem Kreislauf umzuwälzen und die gröberen Assoziate in Umlauf zu halten.

Eine bevorzugte Verwendung des Erfindungsgegenstands ist dessen Einsatz in Textilfärbereien, insbesondere auch zum Färben von Garnen.

Weitere Vorteile der Erfindung folgen aus der nachstehenden Beschreibung. Dort wird die Erfindung anhand mehrerer in den Zeichnungen dargestellten Ausführungsbeispielen näher erläutert.

Es zeigt:
- Fig. 1: eine Frontansicht und zwei Querschnitte eines halbschematisch dargestellten Reaktionsgefässes mit einem Einlaufkreis und einem Auslauf,
- Fig. 2: eine vereinfachte Darstellung einer Anordnung zum Mischen einer Farbsuspension mit dem Reaktionsgefäss nach Fig. 1, und
- Fig. 3: die schematische Gesamtdarstellung einer in einem Färbereibetrieb installierten Anordnung.

In den Figuren werden für die gleichen Funktionselemente dieselben Bezugsziffern verwendet.

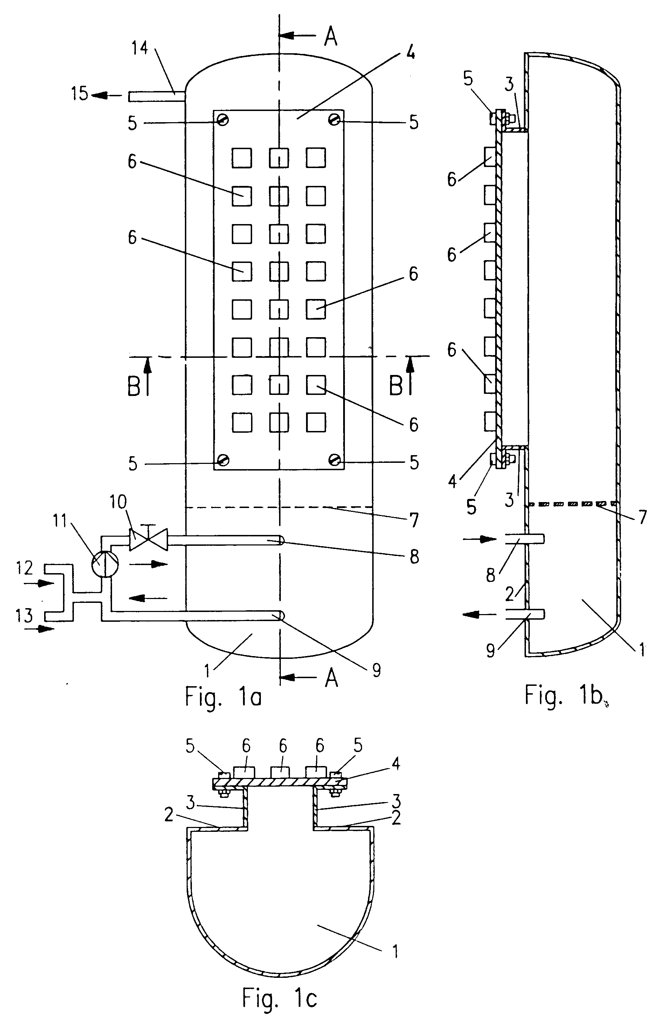

In Fig. 1a ist ein Reaktionsgefäss 1 in Frontansicht dargestellt und hat die Form eines längsgeschnittenen Zylinders mit abgeplatteten Längsseiten und abgerundeten, verjüngten Enden. Das Reaktionsgefäss 1 besteht aus einem handelsüblichen Stahl und weist eine Dicke von 5 mm auf. Wie aus den Querschnitten längs der Linie A-A (Fig. 1b) und längs der Linie B-B (Fig. 1c) deutlich zu entnehmen, ist eine Längsseite 2 des Reaktionsgefässes als eine ebene Fläche mit einem rechteckigen Ausschnitt vorgesehen, der sich etwa über dem oberen Zweidrittel der Fläche erstreckt. Dieser Ausschnitt ist mit einem aufstehenden Rand 3 versehen, auf welchem eine Membranplatte 4 mit Schrauben 5 befestigt ist. Die Membranplatte 4 besteht aus einem legierten Stahl, V4A, und weist eine Dicke von 3,0 mm auf. Auf der Membranplatte 4 sind 24 Ultraschallgeber 6 angeordnet, welche aus piezoelektrischen Schwingkreisen bestehen, die eine Ultraschallfrequenz von 22 kHz und jede für sich eine Leistung von 50 Watt erzeugen. Sie sind unter der Bezeichnung EGS 12 bei der Fa. ELGA AG, CH-Biel handelsüblich erhältlich. Die Schwingfläche beträgt 500 mm x 700 mm. Etwas unterhalb der Membranplatte 4 ist quer im Reaktionsgefäss 1 eine Lochplatte 7 vorgesehen, die so im unteren Drittel des Reaktionsgefässes 1 eine Art Kammer bildet. Die Lochplatte 7 besteht ebenfalls aus einem legierten Stahl, V4A, und bildet ein Sieb aus einem handelsüblichen Lochblech mit einem Lochdurchmesser von 2,5 mm.

In den durch die Lochplatte 7 gebildeten Bereich mündet oben ein Einlauf 8 und unten ein Rücklauf 9, die zusammen mit einer Umwälzpumpe 11 und einem Stromventil 10, das im Druckteil der Pumpe 11 vor dem Reaktorgefäss 1 zwischengeschaltet ist, einen Kreislauf bilden. In den Saugkreis der Umwälzpumpe 11 werden die Farbsuspension 12 und ein Reagenzmittel 13 in den Kreislauf eingelassen.

Oben im Reaktionsgefäss 1 befindet sich ein Auslauf 14 zur Entnahme der hergestellten Farblösung 15.

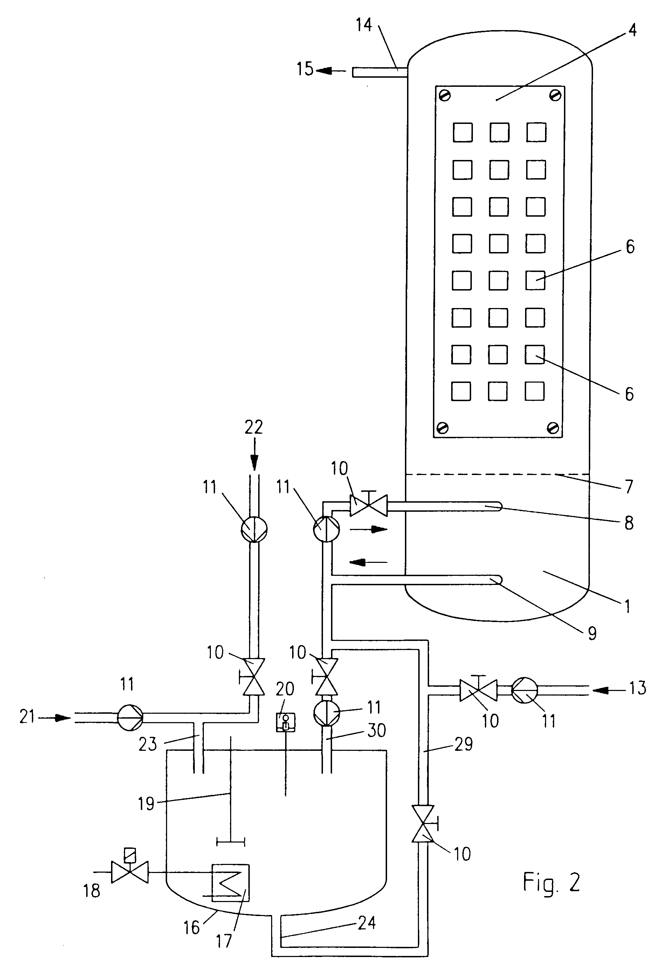

In Fig. 2 ist das Reaktionsgefäss 1 in einer Anordnung zum Mischen der Farbsuspension abgebildet. Dem Reaktionsgefäss 1 ist ein - an sich bekannter - Mischkessel 16 vorgeschaltet, der einen Wärmetauscher 17 mit einer Heisswasser-Zufuhr 18 im unteren Bereich aufweist. Oben ist ein Rührwerk 19 angeordnet, das die eingefüllten Komponenten der Suspension mechanisch vermischt. Um den gewünschten pH-Wert der Mischung zu messen und zu überwachen, ist ein pH-Messgerät 20 vorgesehen. Der Farbansatz 21, d.h. schwerlösliche Farbpigmente, Wasser und weitere Reagenzien 22 werden über den Mischeinlauf 23 in den Mischkessel 16 eingefüllt. Über den Mischablauf 24 wird die Farbsuspension kontinuierlich abgezogen, und über eine Zuleitung 29 zum Reaktionsgefäss 1 weitergeleitet. Das Umlaufverhältnis der Farbsuspension im unteren Bereich des Reaktionsgefässes 1 wird durch das Stromventil 10 der Einlaufleitung 8 im Druckteil der Umwälzpumpe 11 bestimmt.

Eine zusätzliche Rückleitung 30 zwischen der Umwälzpumpe 11 und dem Mischkessel 16 dient der vollständigen Entleerung des Reaktionsgefässes 1.

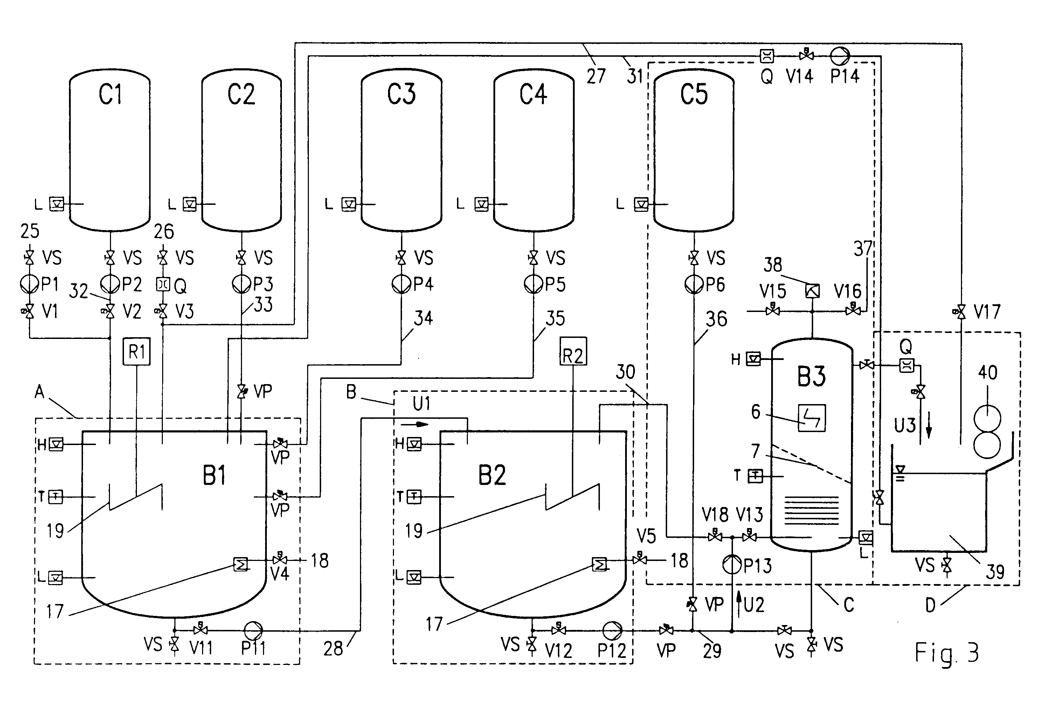

Fig. 3 zeigt die schematische Gesamtdarstellung der Anordnung mit einem Mischkessel B1, einem Puffergefäss B2 und einem Reaktionsgefäss B3. Die gestrichelt gezeichneten Blöcke deuten die aufeinanderfolgenden Verfahrensschritte an:
A die Bildung des Farbansatzes aus Farbstoff, Wasser und verschiedenen Reagenzien,
B den ruhenden Farbnachsatz,
C die Farbaufbereitung im Reaktionsgefäss B3 unter Zugabe des Reduktionsmittels, und
D das Färben der Textilien.

Für den Transport und die Mengenregulierung der verschiedenen Flüssigkeiten, die teilweise eine hohe Viskosität aufweisen, sind Sperrventile V1 bis V17, Druckventile VP, Stromventile VS, Dosierpumpen P1 bis P6 und P12 und Umwälzpumpen P11, P13 und P14 vorgesehen.

Oberhalb des Mischkessels B1 sind Reagenzien-Gefässe C1, C2, C3 und C4 angeordnet. Der Farbstoff 25 wird gleichzeitig mit einem über die Zuleitung 32 aus dem Gefäss C1 zugeführten Reagenzmittel in den Mischkessel B1 eingefüllt. Das Wasser 26 wird über ein Durchfluss-Messgerät Q direkt in den Mischkessel B1 eingefüllt. Auch die Reagenzien aus den Gefässen C2, C3 und C4 werden direkt über die Zuleitungen 33, 34 und 35 in den Mischkessel B1 eingefüllt, wobei in diesem Fall die vom Mischungsverhältnis abhängigen Mengen durch die Laufzeit der Dosierpumpen P3 bis P5 gesteuert werden. Die Druckventile VP gewährleisten einen gleichmässigen Durchfluss.

Im Mischkessel B1 wird der solchermassen zusammengeschüttete Farbansatz gemischt und erwärmt und über eine Zuleitung 28 dem Puffergefäss B2 zugeführt, in welchem die Suspensionskomponenten nötigenfalls weiter gemischt und erwärmt werden. Die so gemischte Suspension wird über die Zuleitung 29 vom Puffergefäss B2 abgezogen und unter Beimischung von Reduktionsmittel, das über die Zuleitung 36 vom Reagenzien-Gefäss C5 hinzugefügt wird, in das Reaktionsgefäss B3 eingeleitet. Durch Öffnen des Sperrventils V13 und Schliessen des Sperrventils V18 wird dieser Farbnachsatz über die Zuleitung 29 in das Reaktionsgefäss B3 eingeleitet. Dieses Reaktionsgefäss B3 ist analog dem in Fig. 1 und Fig. 2 beschriebenen. Die Lochplatte oder das Sieb 7 ist zur Verbesserung des Selbstreinigungseffektes schräg im Reaktionsgefäss B3 angeordnet.

Durch den Zufluss der Suspension unten im Reaktionsgefäss B3 läuft die Farblösung oben aus dem Reaktionsgefäss B3. Druckluft 37, deren Druck mit einem Manometer 38 gemessen und überwacht wird, dient zur vollständigen Entleerung des Reaktionsgefässes B3 über die Rückleitung 30 in das Puffergefäss B2. Die gefärbten Textilien - Garn oder Gewebe - werden durch eine Mangel oder ein Quetschwerk 40 aus dem Farbbad 39 gezogen.

Die verwendete Farbe kann zur Weiterverwendung oder zur Wiederauffrischung über die Rückleitung 31 zum Mischkessel B1 zurückgeführt werden.

In den Reagenzien-Gefässen C1 bis C5 sind Niveau-Sonden L angebracht. In dem Mischkessel B1, dem Puffergefäss B2 und dem Reaktionsgefäss B3 sind zwei Niveau-Sonden H und L in unterschiedlicher Höhe angebracht, damit die vorhandene Menge an Farbsuspension oder an Farblösung gesteuert werden kann.

In den Gefässen B1 und B2 wird durch Temperaturfühler T eine Temperatur von etwa 60°C bzw. 40°C eingestellt. Ein weiterer Temperaturfühler im Reaktionsgefäss B3 dient der Überwachung der Reaktionstemperatur, insbesondere bei exothermen Prozessen.

Nachstehend folgen Beispiele von mit der obigen Anordnung (Fig. 2 und Fig. 3) hergestellten Farblösungen:

### Beispiel 1

Es werden das Küpenfarbpigment Indigo (90 g/l) sowie Dispergatoren (2 g/l Subitol LSN der Chem. Fabrik Tübingen), ein Katalysator (20 ml/l Methanol), Natronlauge und Wasser über den Mischkessel B1 kontinuierlich in das Puffergefäss B2 eingeleitet mit einem Volumenstrom U1 von 30 l/min (siehe Pfeil in Fig. 3). Die eingestellte Temperatur beträgt 40°C. Dieser Farbnachsatz wird vom Puffergefäss B2 mit einem Volumenstrom U2 von 3 l/min (siehe Pfeil in Fig. 3) abgezogen und unter kontinuierlicher Beimischung von Hydroxyaceton als Reduktionsmittel, aus dem Gefäss C5, mit einem Volumenstrom von 60 ml/min in das Reaktionsgefäss B3 eingeführt. Sodann wird diese Farbmischung während etwa 10 Minuten im Reaktionsgefäss B3 mit einer Ultraschallenergie von 600 Watt beaufschlagt, d.h. es sind nur 12 der Ultraschallgeber 6 eingeschaltet. Die Farblösung wird währenddessen kontinuierlich mit der Pumpe P13 umgewälzt.

Da das Reaktionsgefäss B3 senkrecht aufgestellt ist, sinken die Agglomerate in der Suspension ab und werden durch die Pumpe P13 in Umlauf gehalten und zerkleinert. Durch den ständigen Zufluss des Farbnachsatzes wird die Suspension in den Bereich der Ultraschallgeber 6 geführt. Diese homogene Farblösung wird dann oben aus dem Reaktionsgefäss B3 mit einem Volumenstrom U3 (siehe Pfeil in Fig. 3) entsprechend dem zugeführten Volumenstrom abgezogen.

### Beispiel 2

Es werden ein lösungsmittel- und dispergatorfreier Schwefelfarbstoff sowie Soda, Natronlauge, Netzmittel (2 g/l Subitol LSN) und Wasser über den Mischkessel B1 kontinuierlich mit einem Volumenstrom U1 von 30 l/min in das Puffergefäss B2 eingefüllt. Die eingestellte Temperatur im Puffergefäss B2 beträgt hier 60°C. Unter stetiger Zudosierung von Endiol (Hydroxyaceton) als Reduktionsmittel mit einem Volumenstrom von 30 ml/min wird dieser Farbnachsatz mit einem Volumenstrom U2 von 4,5 l/min in das Reaktionsgefäss B3 eingeführt. Nachträglich wird diese Farbsuspension während 15 Minuten im Reaktionsgefäss B3 mit einer Ultraschallenergie von 200 Watt (4 Ultraschallgeber eingeschaltet) beaufschlagt.

Die derart hergestellte Farblösung erreicht trotz Abwesenheit der sonst notwendigen Dispergatoren und Lösungsmittel eine vollständige Verküpung. Somit wird das Abwasser wesentlich geringer belastet.

### Beispiel 3

Es werden Indigo (90 g/l), ein Katalysator (20 ml/l Methanol), Natrium-Dithionit (70 g/l), ein Netzmittel (2 g/l Subitol LSN) und Wasser über den Mischkessel B1 in das Puffergefäss B2 mit einem Volumenstrom U1 von 30 l/min eingeleitet. Die eingestellte Temperatur im Puffergefäss B2 beträgt 50°C. Unter stetiger Beimischung von einer wässrigen Natronlauge mit einem Volumenstrom von 450 ml/min wird dieser Farbnachsatz mit einem Volumenstrom U2 von 6 l/min in das Reaktionsgefäss B3 eingeführt. Sodann wird die Farbmischung während etwa 20 Minuten im Reaktionsgefäss B3 mit einer Ultraschallenergie von 1200 Watt (24 Ultraschallgeber eingeschaltet) beaufschlagt.

Dadurch werden die Farbstoffassoziate zerlegt und es bildet sich eine äusserst homogene Farblösung mit sehr feinverteilten reduzierten Farbstoffen. Die gefärbten Gewebe oder Garne erhalten dadurch tiefere Farbtöne und eine hohe Gleichmässigkeit bei einer gleichbleibenden Farbstoffkonzentration.

### Beispiel 4

Zur Erzielung eines neuartigen Färbeverhaltens wird die sonst verwendete Sulfatoestergruppe eines Vinylsulfonfarbstoffes gegen eine Amino-Schutzgruppe ausgetauscht. Dazu wird eine wässrige Lösung aus bis zu 80 g/l Farbstoff, 2 g/l Netzmittel (Sandopan SN der Fa. Sandoz) und eine Aminoverbindung, z.B. β-Aminopropionsäure, in äquimolarer Menge zum Farbstoff in das Reaktionsgefäss B3 aus dem Mischkessel B1 über das Puffergefäss B2 eingeführt. Es wird eine Pufferlösung mit einem PH-Wert von 10 und mit einem Volumenstrom von 50 ml/min hinzugefügt. Die Betriebstemperatur im Reaktionsgefäss B3 beträgt 60°C. Danach wird dieser Farbnachsatz oder diese Suspension während 25 Minuten mit einer Ultraschallenergie von 400 Watt (8 Ultraschallgeber eingeschaltet) beaufschlagt.

Im Ultraschallfeld werden die Farbassoziate zerlegt, so dass ein Reaktionsumsatz von über 90 % des derart substituierten Vinylsulfonfarbstoffes erreicht wird. Es werden damit sehr gleichmässig durchgefärbte Garne oder Gewebe erhalten.

### Beispiel 5

Es wird eine Mischung verschiedener Vinylsulfon-Reaktivfarbstoffen in Wasser von 25 bis 30°C gelöst und in das Puffergefäss B2 eingeleitet. Es wird eine Alkali-Lösung beigemischt mit einem Volumenstrom von 600 ml/min. Die Betriebstemperatur beträgt 30°C. Danach wird diese Suspension in das Reaktionsgefäss B3 eingeleitet und während 5 Minuten mit einer Ultraschallenergie von 800 Watt (16 Ultraschallgeber eingeschaltet) beaufschlagt. Eine solche Ultraschallbehandlung verhindert eine Dimerisierung bei den Reaktiv-Farbstoffen und führt zu höheren Ausbeuten und verbesserter Gleichmässigkeit auf den Textilien.

Aufgrund der Ultraschallbehandlung der obigen Farbsuspensionen von Reaktiv-Farbstofflösungen sind keine Farbstoffassoziate und/oder Farbstoffdimere mehr vorhanden. Dies ermöglicht eine spektroskopische Kontrolle während des Färbeverfahrens ("on-line"), welche nur bei sehr feinverteilten Farbstofflösungen durchgeführt werden kann.

Um eine optimale Ultraschall-Leistung zu erreichen, müssen die Ultraschallgeber jeweils mit der Spannungsquelle auf die Resonanzfrequenz abgestimmt werden. Dies geschieht in an sich bekannter Weise mit einer nicht dargestellten Versorgungseinheit.

Die vorstehenden Ausführungsbeispiele wurden zum Färben von Garnen effizient und umweltschonend eingesetzt.

## Patentansprüche

1. Verfahren zur Herstellung einer Farblösung aus einer Suspension bestehend aus schwerlöslichen Farbpigmenten, Dispergiermitteln, Reduktionsmitteln, polaren Lösungsmitteln wie Wasser, Alkoholen, Tensiden, Alkalien und/oder Säuren, wobei diese Komponenten mechanisch gemischt werden, dadurch gekennzeichnet, dass in einem ersten Verfahrensschritt die Suspension gerührt wird, und dass in einem zweiten Verfahrensschritt die Agglomerate der Farbpigmente umgewälzt und mittels Ultraschall zerkleinert werden und die Farblösung anschliessend oder gleichzeitig abgezogen wird.

2. Verfahren nach Anspruch 1, dadurch gekennzeichnet, dass in dem ersten Verfahrensschritt die Suspension zusätzlich auf eine Temperatur in dem Bereich von 30°C bis 85°C erwärmt wird.

3. Verfahren nach Anspruch 1 oder 2, dadurch gekennzeichnet, dass die Zufuhr der Suspension und der Abzug der Farblösung kontinuierlich und in gleicher Menge vorgenommen werden.

4. Verfahren nach einem der Ansprüche 1 bis 3, dadurch gekennzeichnet, dass das Reduktionsmittel als letzte Komponente der Suspension zugeführt wird.

5. Verfahren nach einem der vorangehenden Ansprüchen, dadurch gekennzeichnet, dass als Farbpigmente Reaktiv- oder Küpenfarbstoffe verwendet werden.

6. Verfahren nach Anspruch 4 oder 5, dadurch gekennzeichnet, dass als Reduktionsmittel Endiole oder Dithionite verwendet werden.

7. Vorrichtung zur Durchführung des Verfahrens nach einem der Ansprüche 1 bis 6 mit einem Mischkessel zur mechanischen Mischung der Komponenten der Suspension, dadurch gekennzeichnet, dass der Mischkessel (16) über einer Zuleitung (29) mit zumindest einem Reaktionsgefäss (1) mit Ultraschallgebern (6) verbunden ist und dass eine Rückleitung (30) zum Mischkessel (16) vorgesehen ist. (Fig.2)

8. Vorrichtung nach Anspruch 7, dadurch gekennzeichnet, dass die Ultraschallgeber (6) aus piezoelektrischen Schwingkreisen mit einer Frequenz im Bereich von 18 bis 35 kHz bestehen, welche auf einer das Reaktionsgefäss (1) abdeckende Membranplatte (4) angeordnet sind. (Fig.1)

9. Vorrichtung nach Anspruch 8, dadurch gekennzeichnet, dass 24 Ultraschallgeber (6) auf einer Membranplatte (4) vorgesehen sind, wobei die Leistung eines Ultraschallgebers 50 Watt beträgt, und die Membranplatte (4) aus einem legierten Stahl von 1,5 bis 4,0 mm Dicke mit einer Abmessung von 500 mm x 700 mm besteht. (Fig.1)

10. Vorrichtung nach einem der Ansprüche 7 bis 9, dadurch gekennzeichnet, dass das Reaktionsgefäss (B3) zylinderförmig ist mit einer seitlich angeordneten Membranplatte, und dass wenigstens in einem Endbereich mittels eines Siebes (7) ein kammerartiger Bereich abgetrennt ist, an dem eine Pumpe (P13) angeschlossen ist, welche die Suspension mit den Farbpigmenten umwälzt. (Fig.3)

11. Verwendung des Verfahrens nach einem der Ansprüche 1 bis 6 zum Färben von Textilien.

## Claims

1. A method for manufacturing a dye solution from a suspension comprising difficult-to-dissolve dye pigments, dispersion agents, reducing agents polar solvents such as water, alcohols, tensides, alkalis and/or acids, the said components being mixed mechanically, characterised in that in a first method step the suspension is stirred and in a second method step the agglomerates of the dye pigments are circulated and comminuted by means of ultrasound and the dye solution is subsequently or simultaneously drawn off.

2. A method according to claim 1, characterised in that in the first method step the suspension is additionally heated to a temperature in the region of 30 °C to 85 °C.

3. A method according to claim 1 or 2, characterised in that the supply of the suspension and the drawing off of the dye solution is effected continuously and in the same quantity.

4. A method according to one of claims 1 to 3, characterised in that the reducing agent is supplied to the suspension as the last component.

5. A method according to one of the preceding claims, characterised in that reactive or vat dyes are used as dye pigments.

6. A method according to claim 4 or 5, characterised in that endiols or dithionites are used as a reducing agent.

7. Installation for carrying out the method according to one of claims 1 to 6 comprising a mixing vessel for mechanically mixing the components of the suspension, characterised in that the mixing vessel (16) is connected via a supply line (29) to at least one reaction vessel (1) with ultrasonic transmitters (6) and in that a return line (30) to the mixing vessel (16) is provided. (Fig. 2)

8. Installation according to claim 7, characterised in that the ultrasonic transmitters (6) are formed by piezoelectrical oscillating circuits with a frequency in the 18 to 35 kHz range, which are arranged on a diaphragm plate (4) covering the reaction vessel (1). (Fig. 1)

9. Installation according to claim 8, characterised in that 24 ultrasonic transmitters (6) are provided on a diaphragm plate (4), the capacity of an ultrasonic transmitter being 50 W, and the diaphragm plate (4) is made of a steel alloy having a thickness of 1,5 to 4,0 mm and measuring 500 mm x 700 mm. (Fig. 1)

10. Installation according to one of claims 7 to 9, characterised in that the reaction vessel (B3) is cylindrical with a laterally arranged diphragm plate, and in that at least in one end region a chamber-like area is partitioned off by means of a sieve (7), a pump (P13) which circulates the suspension with the dye pigments being connected to the chamber-like area. (Fig. 3)

11. Use of the method according to one of claims 1 to 6 for dyeing textiles.

## Revendications

1. Procédé de fabrication d'une teinture à partir d'une suspension composée de pigments difficilement solubles, de dispersants, de réducteurs, de solvants polaires, tels qu'eau, alcools, agents tensioactifs, alcalis et/ou acides, ces constituants étant mélangés mécaniquement, caractérisé en ce que la suspension est agitée dans une première phase du procédé, et en ce que les agglomérats de pigments sont brassés et désintégrés aux ultrasons dans une seconde phase du procédé, la teinture étant soutirée ultérieurement ou simultanément.

2. Procédé suivant la revendication 1, caractérisé en ce que la suspension est portée en supplément à une température de 30°C à 85°C dans la première phase du procédé.

3. Procédé suivant l'une des revendications 1 et 2, caractérisé en ce que l'arrivée de la suspension et le soutirage de la teinture sont assurés en continu et en quantité égale.

4. Procédé suivant l'une quelconque des revendications 1 à 3, caractérisé en ce que le réducteur est chargé dans la suspension en tant que dernier constituant.

5. Procédé suivant l'une quelconque des revendications précédentes, caractérisé en ce que des colorants réactifs ou de cuve sont utilisés comme pigments.

6. Procédé suivant l'une des revendications 4 et 5, caractérisé en ce que des endiols ou dithionites sont utilisés comme réducteurs.

7. Dispositif pour la réalisation du procédé suivant l'une quelconque des revendications 1 à 6, avec un réservoir de mélange pour le mélange mécanique des constituants de la suspension, caractérisé en ce que le réservoir de mélange (16) est relié, par l'intermédiaire d'une conduite d'arrivée (29), à un réacteur (1) du moins muni de générateurs d'ultrasons (6), et en ce qu'une conduite de retour (30) est prévue en direction du réservoir de mélange (16) (figure 2).

8. Dispositif suivant la revendication 7, caractérisé en ce que les générateurs d'ultrasons (6) se composent de circuits oscillants piézoélectriques d'une fréquence de 18 à 35 kHz, qui sont disposés sur une plaque à membrane (4) recouvrant le réacteur (1) (figure 1).

9. Dispositif suivant la revendication 8, caractérisé en ce que 24 générateurs d'ultrasons (6) sont prévus sur une plaque à membrane (4), la puissance d'un générateur étant de 50 W, et la plaque à membrane (4) se composant d'un acier allié de 1,5 à 4,0 mm d'épaisseur, d'une dimension de 500 mm x 700 mm (figure 1).

10. Dispositif suivant l'une quelconque des revendications 7 à 9, caractérisé en ce que le réacteur (B3) est en forme de cylindre, avec une plaque à membrane disposée latéralement, et en ce que, dans une zone extrême au moins, une zone en forme de compartiment est séparée au moyen d'un crible (7), cette zone étant raccordée à une pompe (P13), qui brasse la suspension avec les pigments (figure 3).

11. Application du procédé suivant l'une quelconque des revendications 1 à 6 pour la coloration de textiles.
